Europäisches Patentamt

European Patent Office

Office européen des brevets

(11) Veröffentlichungsnummer: **0 319 952 B1**

(12) **EUROPÄISCHE PATENTSCHRIFT**

(45) Veröffentlichungstag der Patentschrift: **03.06.92**

(51) Int. Cl.⁵: **A62B** 18/08, F16K 7/02

(21) Anmeldenummer: **88120451.5**

(22) Anmeldetag: **07.12.88**

(54) **Ouetschbares Verschlussventil für Fluid-Leitungen.**

(30) Priorität: **09.12.87 DE 3741665**

(43) Veröffentlichungstag der Anmeldung:
**14.06.89 Patentblatt 89/24**

(45) Bekanntmachung des Hinweises auf die
Patenterteilung:
**03.06.92 Patentblatt 92/23**

(84) Benannte Vertragsstaaten:
**CH DE ES FR GB IT LI SE**

(56) Entgegenhaltungen:
**DE-U- 8 626 767**
**DE-U- 8 715 223**
**FR-A- 1 529 535**
**US-A- 1 366 437**
**US-A- 3 731 717**

(73) Patentinhaber: **Drägerwerk Aktiengesellschaft**
**Moislinger Allee 53-55**
**W-2400 Lübeck 1(DE)**

(72) Erfinder: **Riggert, Eckhardt**
**Dorfstrasse 1**
**W-2401 Ovendorf(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Die Erfindung betrifft ein Ventil nach dem Oberbegriff des Anspruchs 1.

Derartige Ventile dienen zum Absperren und Öffnen von Gas- oder Flüssigkeitsleitungen, wie es zum Beispiel bei einem bekannten Pipettierball zum Ansaugen von Flüssigkeiten in Pipetten der Fall ist. Derartige Pipettierbälle werden von der Firma Brand, Laborbedarf, DE unter der Artikel-Nr. 253 00 vertrieben.

Die bekannten Pipettierbälle besitzen Ansaug- und Belüftungsventilkörper in Form von Kugeln, die in den entsprechenden elastischen Ansaug- und Belüftungsleitungen untergebracht sind. Die jeweilige Leitung liegt als Hülle um eine Kugel und umschließt deren Umfang dichtend. Durch teilweises Quetschen der Hülle gegen die harte Kugeloberfläche weicht die Hülle der Druckkraft aus und hebt sich am nicht druckbelasteten Umfang von der Kugel ab. Somit wird der Strömungsweg freigegeben.

Die bekannten Ventile können nur von Hand betätigt werden, da zum Öffnen am an der Innenwand der Hülle anliegenden Umfang der Kugel gequetscht werden muß. Eine Quetschung vor oder hinter diesem anliegenden Umfang (Großkreis der Kugel) führt nur zu einem verstärkten Verschluß der Leitung. Es kommt also darauf an, mit einem geübten, zunächst tastenden Handgriff die für die Quetschung geeignete Stelle an der Leitung zu finden.

In vielen Anwendungsfällen ist es jedoch erforderlich, Ventile der genannten Art nicht von Hand zu betätigen, da die Hände für andere Arbeiten freigehalten bleiben müssen. Ein solcher Anwendungsfall liegt z. B. dann vor, wenn das Ventil innerhalb einer Trinkleitung zur Aufnahme flüssiger Nahrungsmittel oder Medikamente für den Träger eines Schutzanzuges und/oder einer Haube dient. Dies kann z. B. bei einem Piloten während eines Fluges, oder bei dem Träger eines Schutzanzuges oder einer Schutzmaske während des Aufenthaltes in giftiger oder verseuchter Atmosphäre notwendig werden.

Ein solcher Anwendungsfall ist in der FR 747 066 geschildert. Dort liegt das Ventil außerhalb der Schutzmaske und muß von Hand betätigt werden. Eine Verletzung des Schlauches strömungsabwärts des Ventils würde ein unerwünschtes Eindringen von Schadstoffen in den Maskeninnenraum erlauben. Ein Verlagern des Ventils in den Maskeninnenraum macht seine Betätigung unmöglich.

Der vorliegenden Erfindung liegt die Aufgabe zugrunde, ein Ventil der genannten Art so zu verbessern, daß seine Betätigung auch für ungeübte Personen leicht und auch ohne Zuhilfenahme der Hand durchführbar ist.

Die Lösung der Aufgabe erfolgt durch die kennzeichnenden Merkmale des Anspruchs 1.

Der Vorteil der Erfindung liegt im wesentlichen darin, daß zwischen den Stützkörpern eine breitere Quetschzone zur Verfügung steht, die bei Benutzung von Hand leicht und sicher zusammengedrückt werden kann. Es kommt jetzt nicht mehr darauf an, eine möglichst linienförmige Umfangszone um den Verschlußkörper zu treffen. Auch geringfügige Abweichungen von der Mitte der Quetschzone führen zu einem Öffnen des Ventils.

Für den Anwendungsfall in der Haube eines Schutzanzuges kann das Ventil in das Haubeninnere, also als Endstück einer Zuführungsleitung, angebracht werden, so daß es beispielsweise zur Ansaugung von Flüssignahrung mit den Zähnen geöffnet und gleichzeitig durch die Leitung die Nahrung angesaugt werden kann. Die Quetschzone ist dazu breit genug, daß sie von dem Mund und den Zähnen ertastet und durch Zusammenbeißen zusammengedrückt werden kann. Durch die endständige Anbringung des Ventils bleibt die Zuführungsleitung auch dann dicht, wenn sie im Bereich außerhalb der Haube beschädigt wird.

Besonders zweckmäßig ist es, die Stützkörper kreisscheibenförmig auszubilden und mit einem Steg zu verbinden. Ein derartiger hantelförmiger Verschlußkörper kann einfach in jede beliebige Position eines Leitungsstückes positioniert werden. Beim Zusammendrücken der Leitungswände innerhalb der Quetschzone bildet der Steg einen Anschlag, so daß die Leitung nicht versehentlich abgedrückt werden kann.

Vorteilhafterweise kann der strömungsaufwärts liegende Stützkörper durchbrochen sein, so daß der Raum zwischen den Stützkörpern ständig mit dem Fluid gefüllt bleibt.

Um eine feste Positionierung innerhalb der Leitungsführung sicherzustellen, kann der durchbrochene Stützkörper in einem Rezeß der Hülle aufgenommen werden.

Ein Ausführungsbeispiel der Erfindung wird anhand einer schematischen Zeichnung dargestellt und im folgenden näher erläutert:

Es zeigen

Fig. 1     einen Schnitt durch ein Leitungsstück mit dem Ventilkörper

Fig. 2     die Ansicht auf das Mündungsende des gequetschen Leitungsstückes.

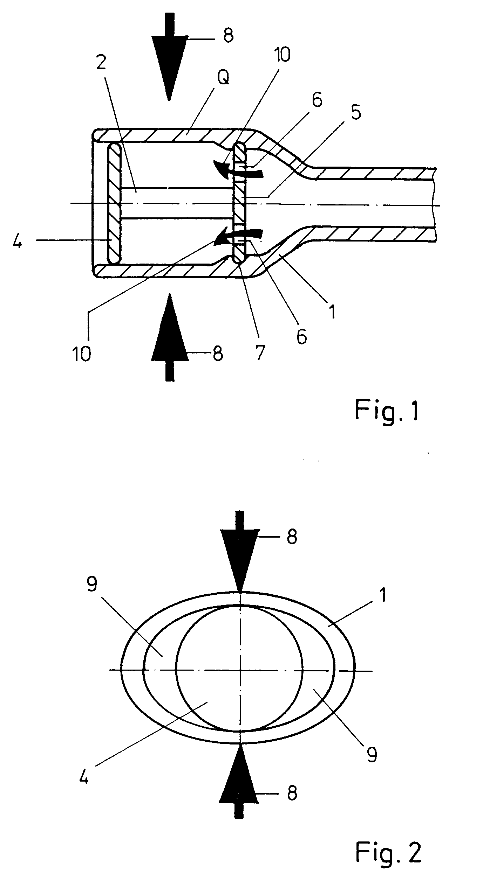

In Fig. 1 ist das Ende einer schlauchförmigen, elastischen Hülle (1) als Leitungsstück für ein Fluid dargestellt. In der Hülle (1) ist ein hantelförmiger Verschlußkörper eingelassen, der aus zwei mit einem Steg (2) verbundenen, kreisscheibenförmigen Stützkörpern (4,5) besteht. Die Strömungsrichtung eines durch die Hülle (1) geleiteten Fluids ist durch Strömungspfeile (10) angedeutet. Der strömungsaufwärts befindliche Stützkörper (5) besitzt Durchbrüche (6) und ist in einem Rezeß (7) in der Hülle (1) gehalten. Der strömungsabwärts liegende Stützkörper (4) liegt an seinem Unfang dicht an der Innenwand der Hülle (1) an und verhindert eine Weiterströmung des Fluids. Der Steg (2) bestimmt mit seiner Länge eine Quetschzone (Q) der Hülle (1) zwischen den Stützkörpern (4,5).

Um das Ventil zu öffnen, ist die Hülle (1) innerhalb der Quetschzone (Q) in Richtung der Öffnungspfeile (8) einzudrücken (Fig. 2), so daß die Hüllenwandung, im Beispiel mit kreisförmigem Querschnitt angenommen, der Druckkraft ausweicht und ellipsenförmige Ausbuchtungen (9) bildet. In diesen Ausbuchtungen (9) kann das Fluid an dem Stützkörper (4) vorbeiströmen. Nach dem Loslassen der elastischen Hülle (1) legt sie sich wieder selbsttätig um den Stützkörper (4) und verschließt die Leitung.

Die Betätigung des Ventils kann sowohl durch Zusammendrücken von Hand als auch durch die zwischen den Stützkörpern (4,5) eindrückenden Zähne eines nicht dargestellten Maskenträgers erfolgen, der das Leitungsstück in den Mund genommen hat.

## Patentansprüche

1. Ventil in einer elastischen, von einem Fluid durchströmbaren Hülle, die den Verschlußkörper dichtend umgibt und die durch Quetschen auf den Verschlußkörper teilweise vom Verschlußkörper abhebbar ist, dadurch gekennzeichnet, daß der Verschlußkörper durch zwei der Innenwand der Hülle (1) anliegende, in Abstand zueinander angeordnete Stützkörper (4,5) gebildet ist, wobei der Abstand zur Bildung einer Quetschzone (Q) im wesentlichen dem Wandabstand der Hülle (1) entspricht.

2. Ventil nach Anspruch 1, dadurch gekennzeichnet, daß die Stützkörper (4,5) kreisscheibenförmig ausgebildet und mit einem Steg (2) verbunden sind.

3. Ventil nach Anspruch 1 oder 2, dadurch gekennzeichnet, daß der strömungsaufwärts liegende Stützkörper (5) duchbrochen ist.

4. Ventil nach Anspruch 3, dadurch gekennzeichnet, daß der durchbrochene Stützkörper (5) in einem Rezeß (7) der Hülle (1) aufgenommen ist.

## Claims

1. Valve in an elastic jacket through which a fluid can flow and which surrounds the closing body in a sealing manner and which can in part be lifted off from the closing body by squeezing on the closing body, characterised in that the closing body is formed by two support bodies (4, 5) which rest against the inner wall of the jacket (1) and are arranged at a distance from each other, the distance for the formation of a squeezing zone (Q) substantially corresponding to the distance between the walls of the jacket (1).

2. Valve according to claim 1, characterised in that the support bodies (4, 5) are formed in the shape of circular discs and are connected with a cross-piece (2).

3. Valve according to claim 1 or 2, characterised in that the support body (5) which lies upstream is perforated.

4. Valve according to claim 3, characterised in that the perforated support body (5) is received in a recess (7) of the jacket (1).

## Revendications

1. Vanne placée dans une gaine élastique, traversée par un fluide, laquelle gaine entoure de manière étanche le corps d'obturation et peut être soulevée partiellement de celui-ci, par écrasement sur le corps d'obturation, caractérisée en ce que le corps d'obturation est formé par deux corps d'appui (4, 5) s'appliquant contre la paroi intérieure de la gaine (1), espacés l'un de l'autre, l'écartement destiné à former une zone d'écrasement (Q), correspondant à peu près à la distance de la paroi de la gaine (1).

2. Vanne selon la revendication 1, caractérisée en ce que les corps d'appui (4, 5) sont en forme de disques circulaires et sont assemblés par une cloison (2).

3. Vanne selon la revendication 1 ou 2, caractérisée en ce que le corps d'appui (5), situé en amont, est interrompu.

4. Vanne selon la revendication 3, caractérisée en ce que le corps d'appui (5) interrompu est logé dans une partie en retrait (7) de la gaine (1).

Fig. 1

Fig. 2